# EUROPEAN PATENT APPLICATION

(11) **EP 4 269 473 A1**
(43) Date of publication of application: **01.11.2023**
(21) Application number: 21910996.4
(22) Date of filing: 23.12.2021
(51) Int. Cl.: C08J 3/12

(54) **METHOD FOR PRODUCING HYDRATED ETHYLENE-VINYL ALCOHOL COPOLYMER PELLETS**

(30) Priority: 24.12.2020 JP 2020215530
(71) Applicant: Kuraray Co., Ltd., Kurashiki-shi, Okayama 710-0801 (JP)
(72) Inventor: SHIOTA, Hirotaka, Okayama-shi, Okayama 702-8601 (JP)
(74) Representative: Müller-Boré & Partner Patentanwälte PartG mbB
(86) International application number: PCT/JP2021/047994
(87) International publication number: WO 2022/138857

(57) **Abstract**

A method of producing water-containing EVOH pellets comprises: a first step of introducing a water-containing EVOH with a water content W1 from 10 to 90 mass% and at a temperature from 80°C to 130°C into an extruder for melt kneading; and a second step of cutting the water-containing EVOH extruded from the extruder for obtaining water-containing EVOH pellets, wherein the extruder has a back slit and water is discharged from the back slit, the water-containing EVOH is extruded from the extruder at a temperature from 80°C to 120°C, the water-containing EVOH extruded from the extruder has a water content W2 from 5 to 50 mass%, and a ratio (W2/W1) of the water content W2 to the water content W1 is 0.2 or more and less than 1. The production method allows efficient reduction of water in the water-containing EVOH while inhibiting elution of the EVOH and thus allows efficient production of water-containing EVOH pellets, and also provides high drying efficiency and thus allows inhibiting degradation due to heat of dried EVOH pellets to be obtained.

## Description

### TECHNICAL FIELD

The present invention relates to a method of producing water-containing ethylene-vinyl alcohol copolymer pellets.

### BACKGROUND ART

An ethylene-vinyl alcohol copolymer (hereinafter, may be referred to as EVOH) is a polymer material excellent in oxygen barrier properties, aroma retention, grease resistance, antistatic properties, mechanical strength, and the like and widely used by being shaped into films, sheets, containers, and the like. A general method of producing such an EVOH includes a method comprising saponifying an ethylene-vinyl ester copolymer obtained by copolymerizing ethylene with a vinyl ester, such as vinyl acetate, in an organic solvent containing an alcohol in the presence of a saponification catalyst.

As a post-treatment method for the alcohol solution of the EVOH obtained by saponification, a method (Patent Document 1) is known that introduces the alcohol solution of the EVOH into an apparatus and contacts the solution with water in the apparatus to convert the alcohol in the solution to water and reduces water in the water-containing EVOH taken out of the apparatus, followed by cutting for obtaining water-containing EVOH pellets.

Patent Document 1 describes a method of obtaining water-containing EVOH pellets by reducing water in a water-containing EVOH composition obtained by converting the alcohol to water using a kneader with a liquid outlet, followed by extruding the water-containing composition from a die and cutting. Patent Document 2 describes a method of obtaining a water-containing EVOH with a reduced water content by kneading a water-containing EVOH obtained by contacting a water/methanol solution of an EVOH with water vapor using a twin-screw extruder (front end) provided with a vent downstream from a feed port (die side).

### PRIOR ART DOCUMENTS

### PATENT DOCUMENTS

Patent Document 1: JP 2002-284811 A
Patent Document 2: JP 2010-132881 A

### SUMMARY OF THE INVENTION

### PROBLEMS TO BE SOLVED BY THE INVENTION

In these methods, however, when water in the water-containing EVOH is reduced, the EVOH is sometimes eluted into the discharged water and discharged together with the water from the liquid outlet of the kneader or the vent of the twin-screw extruder. Continuous operation thus causes an elution trace of the EVOH to be left on the liquid outlet or the vent, and leaving the situation for a long period has a possibility of blocking the liquid outlet or the vent and affecting the production, and accordingly, conventional systems have to be regularly cleaned. For these reasons, a method of reducing water in a water-containing EVOH while inhibiting elution of the EVOH has been desired. In addition, since an EVOH is prone to thermal degradation, a method that is high in drying efficiency and allows inhibiting degradation due to heat of dried EVOH pellets to be obtained has also been desired.

The present invention has been made to solve the above problems, and it is an object thereof to provide a method of producing water-containing EVOH pellets that allows efficient reduction of water in the water-containing EVOH while inhibiting elution of the EVOH and is high in drying efficiency.

### MEANS FOR SOLVING THE PROBLEMS

The above problems are solved by providing a method of producing water-containing EVOH pellets, comprising: a first step of introducing a water-containing EVOH with a water content W1 from 10 to 90 mass% and at a temperature from 80°C to 130°C into an extruder for melt kneading; and a second step of cutting the water-containing EVOH extruded from the extruder for obtaining water-containing EVOH pellets, wherein the extruder has a back slit and water is discharged from the back slit, the water-containing EVOH is extruded from the extruder at a temperature from 80°C to 120°C, the water-containing EVOH extruded from the extruder has a water content W2 from 5 to 50 mass%, and a ratio (W2/W1) of the water content W2 to the water content W1 is 0.2 or more and less than 1.

In this context, it is preferred that the extruder has a cylinder temperature from 70°C to 110°C. It is also preferred that the extruder does not have a liquid outlet downstream from an inlet of the water-containing EVOH. It is also preferred that the extruder has a screw rotation speed from 10 to 2000 rpm.

It is preferred that the above production method further comprising a step of: introducing an EVOH solution into a vessel, the solution containing 50 parts by mass or more of an alcohol with a boiling point of 100°C or less based on 100 parts by mass of an EVOH; contacting the solution with water vapor in the vessel to let out the alcohol together with the water vapor; and taking the water-containing EVOH out of the vessel, wherein the water-containing EVOH taken out of the vessel is introduced into the extruder.

It is preferred that the EVOH has an ethylene unit content from 20 to 60 mol%.

### EFFECTS OF THE INVENTION

The production method of the present invention allows efficient reduction of water in the water-containing EVOH while inhibiting elution of the EVOH and thus allows efficient production of water-containing EVOH pellets, and also provides high drying efficiency and thus allows inhibiting degradation due to heat of dried EVOH pellets to be obtained.

### BRIEF DESCRIPTION OF THE DRAWINGS

Fig. 1 is a diagram illustrating cylinder configuration and screw configuration of a twin-screw extruder in Examples 1, 4 - 6 and Comparative Examples 3-5.
Fig. 2 is a diagram illustrating cylinder configuration of a twin-screw extruder in Example 2.
Fig. 3 is a diagram illustrating cylinder configuration of a twin-screw extruder in Example 3.
Fig. 4 is a diagram illustrating cylinder configuration of a twin-screw extruder in Comparative Example 1.
Fig. 5 is a diagram illustrating cylinder configuration of a twin-screw extruder in Comparative Examples 2, 6.
Fig. 6 is a diagram illustrating configuration of a hot cutter in Examples 1 - 6 and Comparative Examples 1 - 6.

### MODES FOR CARRYING OUT THE INVENTION

The present invention is a method of producing water-containing EVOH pellets, comprising: a first step of introducing a water-containing EVOH with a water content W1 from 10 to 90 mass% and at a temperature from 80°C to 130°C into an extruder for melt kneading; and a second step of cutting the water-containing EVOH extruded from the extruder for obtaining water-containing EVOH pellets, wherein the extruder has a back slit and water is discharged from the back slit, the water-containing EVOH is extruded from the extruder at a temperature from 80°C to 120°C, the water-containing EVOH extruded from the extruder has a water content W2 from 5 to 50 mass%, and a ratio (W2/W1) of the water content W2 to the water content W1 is 0.2 or more and less than 1. The production method allows efficient reduction of water in the water-containing EVOH while inhibiting elution of the EVOH, and thus allows efficient production of water-containing EVOH pellets with a predetermined water content.

Herein, a water-containing EVOH to be introduced into an extruder may be referred to as a water-containing EVOH used in the present invention, and a water-containing EVOH obtained by being extruded from the extruder may be referred to as a water-containing EVOH obtained in the present invention.

The water-containing EVOH used in the present invention is preferably in a paste containing an EVOH and water. The water-containing EVOH has a water content W1 from 10 to 90 mass% and a temperature from 80°C to 130°C. As described later, the water-containing EVOH may contain another component, such as an alcohol and an alkali metal salt.

An EVOH constituting the water-containing EVOH used in the present invention (hereinafter, may be expressed as an "EVOH to be used in the present invention" or "the EVOH") is usually obtained by saponifying an ethylene-vinyl ester copolymer. The ethylene content in the EVOH is preferably from 20 to 60 mol%. When the ethylene content of the EVOH is 20 mol% or more, prevention of too low melt viscosity of the water-containing EVOH in the extruder is facilitated by reducing the water content of the water-containing EVOH to be fed to the extruder, thereby further inhibiting the elution of the EVOH. The ethylene content is more preferably 23 mol% or more, even more preferably 25 mol% or more, and particularly preferably 30 mol% or more. Meanwhile, when the ethylene content of the EVOH is 60 mol% or less, the gas barrier properties are improved. The ethylene content is more preferably 50 mol% or less, even more preferably 45 mol% or less, and particularly preferably 40 mol% or less. It should be noted that there are no substantial changes in the ethylene content and the degree of saponification of the EVOH between at the end of the saponification step and at the end of onward steps described later, and the ethylene content and the degree of saponification are usually measured after finishing all steps.

A specific description is given below on the method of producing the EVOH. As described earlier, the EVOH is usually obtained by saponifying an ethylene-vinyl ester copolymer. Copolymerization of ethylene with a vinyl ester may be any one of solution polymerization, suspension polymerization, emulsion polymerization, and bulk polymerization. The copolymerization may be either in a continuous or batch process. An example of polymerization conditions in the solution polymerization is given below.

A solvent to be used is preferably an alcohol with a boiling point of 100°C or less because of the solubility of the ethylene-vinyl ester copolymer and the EVOH, the handleability, the capability of efficiently converting the alcohol to water, and the like. The boiling point is more preferably 80°C or less and even more preferably 70°C or less.

Examples of the alcohol with a boiling point of 100°C or less include methanol, ethanol, n-propyl alcohol, isopropyl alcohol, t-butyl alcohol, and the like, and methanol is particularly preferred.

Examples of an initiator used for the polymerization include: azonitrile initiators, such as 2,2-azobisisobutyronitrile, 2,2-azobis-(2,4-dimethylvaleronitrile), 2,2-azobis-(4-methoxy-2,4-dimethylvaleronitrile), and 2,2-azobis-(2-cyclopropylpropionitrile); organic peroxide initiators, such as isobutyryl peroxide, cumyl peroxyneodecanoate, diisopropyl peroxycarbonate, di-n-propyl peroxydicarbonate, t-butyl peroxyneodecanoate, lauroyl peroxide, benzoyl peroxide, and t-butyl hydroperoxide; and the like.

Examples of the vinyl ester include fatty acid vinyl esters, such as vinyl acetate, vinyl propionate, and vinyl pivalate, and vinyl acetate is preferred. In addition, the EVOH may contain 0.0002 to 0.2 mol% of a vinylsilane compound as a copolymerization component. Examples of the vinylsilane-based compound include vinyltrimethoxysilane, vinyltriethoxysilane, vinyltri(β-methoxy-ethoxy)silane, and γ-methacryloxypropylmethoxysilane. Among them, vinyltrimethoxysilane and vinyltriethoxysilane are preferably used.

The polymerization conditions are preferably as follows.
(1) Temperature: preferably from 20°C to 90°C, more preferably from 40°C to 70°C.
(2) Time (in the case of continuous polymerization, average residence time): preferably from 2 to 15 hours, more preferably from 3 to 11 hours.
(3) Degree of polymerization: based on the charged vinyl ester, preferably from 10% to 90%, more preferably from 30% to 80%.
(4) Resin content in the solution after polymerization: preferably from 5 to 85 mass%, more preferably from 20 to 70 mass%.

It should be noted that the polymerization may be carried out in the presence of a small amount of a monomer other than ethylene and the vinyl ester copolymerizable with them, for example: α-olefins, such as propylene, butylene, isobutylene, pentene, hexene, α-octene, and α-dodecene; alkenes with an ester group, such as 3-acyloxy-1-propene, 3-acyloxy-1-butene, 4-acyloxy-1-butene, 3,4-diacyloxy-1-butene, 3-acyloxy-4-methyl-1-butene, 4-acyloxy-2-methyl-1-butene, 4-acyloxy-3-methyl-1-butene, 3,4-diacyloxy-2-methyl-1-butene, 4-acyloxy-1-pentene, 5-acyloxy-1-pentene, 4,5-diacyloxy-1-pentene, 4-acyloxy-1-hexene, 5-acyloxy-1-hexene, 6-acyloxy-1-hexene, 5,6-diacyloxy-1-hexene, and 1,3-diacetoxy-2-methylenepropane; unsaturated acids, such as acrylic acid, methacrylic acid, crotonic acid, maleic acid, and itaconic acid, anhydrides, salts , mono- and di-alkyl esters thereof; nitriles, such as acrylonitrile and methacrylonitrile; amides, such as acrylamide and methacrylamide; olefin sulfonic acids, such as ethylene sulfonic acid, allyl sulfonic acid, and methallyl sulfonic acid, and salts thereof; alkyl vinyl ethers; vinyl ketone; N-vinyl pyrrolidone; vinyl chloride; vinylidene chloride; and the like. The content of the monomer units other than ethylene, the vinyl ester, and the vinyl alcohol in the EVOH is preferably 20 mol% or less, and in some cases, preferably 10 mol% or less, 5 mol% or less, 3 mol% or less, 1 mol% or less, and 0.1 mol% or less. The EVOH may contain no such another monomer unit.

The polymerization is carried out for a predetermined time, and after reaching a predetermined degree of polymerization, a polymerization inhibitor is added as needed and unreacted ethylene gas is removed by evaporation, followed by purging unreacted vinyl ester. Examples of the method of purging unreacted vinyl ester to be employed include a method comprising: continuously feeding the polymerization solution from which ethylene has been removed from the upper portion of a tower packed with Raschig rings at a fixed rate; blowing vapor of an organic solvent, preferably an alcohol with a boiling point of 100°C or less, most preferably methanol into the tower from a lower portion of the tower; distilling mixed vapor of the organic solvent and the unreacted vinyl ester from the top of the tower; and discharging a copolymer solution from which the unreacted vinyl ester has been removed from the bottom of the tower, and the like.

To the copolymer solution from which the unreacted vinyl ester has been removed, an alkaline catalyst is added to saponify vinyl ester components in the copolymer. The saponification method may be either a continuous or batch process. The alkaline catalyst to be used may be sodium hydroxide, potassium hydroxide, alkali metal alcoholate, and the like. The solvent used for the saponification is preferably methanol. For example, the saponification conditions are as follows.
(1) Concentration of the ethylene-vinyl ester copolymer in the solution: from 10 to 50 mass%.
(2) Reaction temperature: from 30°C to 150°C
(3) Amount of the catalyst to be used: from 0.005 to 0.6 equivalents (based on the vinyl ester components)
(4) Time (average residence time in the case of continuous polymerization): from 10 minutes to 6 hours.

In general, continuous saponification allows more efficient removal of methyl acetate generated by the saponification, and thus a resin with a high degree of saponification is obtained using a less amount of the catalyst compared with a case of batch saponification. In the case of continuous polymerization, saponification has to be carried out at a higher temperature to prevent precipitation of the EVOH generated by the saponification. Accordingly, in continuous saponification, the reaction temperature and the amount of the catalyst are preferably in the following ranges.
Reaction temperature: from 70°C to 150°C.
Amount of the catalyst to be used: from 0.005 to 0.1 equivalents (based on the vinyl ester components)

The degree of saponification of the EVOH to be obtained depends on the intended use while the degree is preferably 80 mol% or more of the vinyl ester components, and from the perspective of further improvement of the gas barrier properties, more preferably 95 mol% or more, even more preferably 98 mol% or more, and particularly preferably 99 mol% or more. The degree of saponification may be arbitrarily adjusted by the conditions.

As described earlier, for particularly producing EVOH pellets that are excellent in melt stability and have good productivity in long-run operation, the EVOH preferably has a degree of saponification of 99.7 mol% or more, more preferably 99.8 mol% or more, even more preferably 99.9 mol% or more, and particularly preferably 99.95 mol% or more, and it is still preferred to further adjust the saponification conditions as below for obtaining such an EVOH.

The method of obtaining the EVOH with a high degree of saponification of 99.9 mol% or more is preferably a continuous process. Examples of the method of obtaining a high degree of saponification in the continuous process include: a method comprising adding the catalyst from a plurality of portions of the saponification reaction tower; a method comprising increasing the amount of the catalyst to be used; a method comprising increasing the amount of methanol to be blown from the lower portion of the saponification reaction tower; and the like. Meanwhile, examples of the method of obtaining the EVOH with a high degree of saponification of 99.9 mol% or more in the batch process include: a method comprising adding the catalyst by division into a plurality of times; a method comprising increasing the amount of the catalyst to be used; a method comprising increasing the amount of methanol vapor or nitrogen gas to be blown into the saponification reaction vessel; and the like.

By the saponification step, a solution or a paste containing the EVOH is obtained. Since the EVOH after saponification reaction contains the alkaline catalyst, by-product salts, such as sodium acetate and potassium acetate, and other impurities, they may be removed by neutralization and washing as needed. In this situation, when the EVOH after saponification reaction is washed with deionized water, or the like, containing almost no metal ions, chloride ions, and the like, the catalyst residues, such as sodium acetate and potassium acetate, may be partially remained in the EVOH.

As a post-treatment method for the EVOH solution or paste after saponification reaction, it is preferred that, in the tower type vessel, mixed vapor of the solvent and water is fed from a lower portion of the vessel and the EVOH solution or paste is fed from a position above the position of feeding the mixed vapor, thereby partially converting the solvent in the feed EVOH solution or paste to water to produce an EVOH solution with a high concentration. The EVOH in the EVOH solution to be fed to the tower type vessel preferably has a concentration from 15 to 50 mass% and more preferably from 25 to 40 mass%. It is also preferred that the mass ratio of the amount of the feed EVOH solution to the amount of the feed mixed vapor (feed solution amount/feed vapor amount) is from 100/400 to 100/8. Further, the water content in the mixed vapor is preferably from 20 to 70 mass%. The solvent to be used for the mixed vapor is preferably an alcohol with a boiling point of 130°C or less, and examples of such an alcohol include alcohols, such as methanol, ethanol, propanol, and butanol. The solvent is more preferably an alcohol with a boiling point of 100°C or less, and among them, methanol is preferred due to the availability, the inexpensiveness, the low boiling point, and the handleability.

The EVOH solution or paste thus obtained usually contains 50 parts by mass or more of an alcohol with a boiling point of 100°C or less based on 100 parts by mass of the EVOH. The alcohol content is preferably 1000 parts by mass or less and more preferably 500 parts by mass or less. The alcohol content in this range allows efficient resin production while securing the fluidity of the EVOH solution. The alcohol is preferably methanol. Further, the above EVOH solution after saponification may be a solution of, not only the alcohol solution, a mixed solvent in which another solvent, such as water, is added as needed to the extent of precipitating no EVOH.

A preferred method of obtaining the water-containing EVOH used in the present invention further comprises a step of: introducing an EVOH solution into a vessel, the solution containing 50 parts by mass or more of an alcohol with a boiling point of 100°C or less based on 100 parts by mass of the EVOH obtained as above, for example; contacting the solution with water vapor in the vessel to let out the alcohol together with the water vapor; and taking the water-containing EVOH out of the vessel, wherein the water-containing EVOH taken out of the vessel is introduced into the extruder described later. Such a method allows efficient conversion of the alcohol in the EVOH solution to water and also facilitates adjustment of the water content and the temperature of the EVOH.

The method of contacting the EVOH solution introduced into the vessel with water vapor in the vessel is not particularly limited and may be either in a continuous or batch method. The form of the vessel is not particularly limited, either, and is preferably a tower type vessel in the case of the continuous process and a bath type vessel in the case of the batch process. Considering the production efficiency, the continuous process is industrially preferred. Examples of the tower type vessel include plate towers, such as a perforated plate tower and a bubble cap tower, and packed towers filled with ring packings and the like.

It is preferred that, in the tower type vessel, water vapor is fed from a lower portion of the vessel and the EVOH solution or paste is fed from a position above the position of feeding the water vapor to let out the solvent (alcohol) in the feed EVOH solution or paste together with the water vapor and to take a water-containing EVOH with a water content from 10 to 90 mass% out of the vessel. A too small amount of the introduced water vapor causes reduction in the solvent (alcohol) removal efficiency, and on the other hand, a too large amount causes a disadvantage in the costs, and thus the amount of the introduced water vapor is preferably from 0.3 to 30 times the amount of the introduced EVOH solution or paste in the mass ratio, more preferably from 0.5 to 10 times, and even more preferably from 0.7 to 5 times. The water vapor to contact the EVOH solution or paste may contain 10 parts by mass or less of the solvent (alcohol) based on 100 parts by mass of the water vapor, whereas it is preferred to contain no solvent (alcohol) in the water vapor in order to efficiently remove the solvent (alcohol). The water-containing EVOH may contain from 0 to 10 parts by mass of the solvent (alcohol) based on 100 parts by mass of the EVOH. The water-containing EVOH may further contain the saponification catalyst residues and the like.

The alcohol vapor and the water vapor let out from the upper portion of the tower are condensed by a condenser to be collected as an aqueous alcohol solution, which may be purified for reuse as needed. The EVOH solution or paste directly contacts the water vapor in the vessel and the content of the solvent (alcohol) gradually decreases, and in the meantime, the EVOH is in a swollen paste and can be taken out of the vessel without gelation while maintaining the fluidity. Although dissolved in a methanol/water mixed solvent at atmospheric pressure approximately at a temperature, for example, from 60°C to 70°C, the EVOH is not dissolved at atmospheric pressure in the case of the solvent of water only. However, in the presence of pressurized water vapor at a temperature of, for example, 90°C or more, the EVOH is capable of maintain the fluidity even in a state of substantially containing water only.

The temperature in the vessel is preferably from 100°C to 150°C. If the temperature in the vessel is less than 100°C, the fluidity of the water-containing EVOH is insufficient and there is a risk of gelation and blockage in the vessel. The temperature is more preferably 110°C or more and even more preferably 120°C or more. Meanwhile, if the temperature in the vessel is more than 150°C, the EVOH is sometimes degraded. The temperature is more preferably 140°C or less.

An excessively low pressure in the vessel causes a risk of reducing the alcohol removal efficiency. The pressure in the vessel is preferably 0.1 MPa or more, more preferably 0.15 MPa or more, and even more preferably 0.2 MPa or more. Meanwhile, an excessively high pressure in the vessel causes a too high water content of the water-containing EVOH taken out of the vessel, thereby causing a risk of too low melt viscosity of the water-containing EVOH to be introduced into an extruder described later. Accordingly, the pressure in the vessel is preferably 0.6 MPa or less, more preferably 0.5 MPa or less, and even more preferably 0.4 MPa or less.

After contacting the EVOH solution with water vapor as above, a water-containing EVOH is taken out of the vessel. The water-containing EVOH is preferably used as the water-containing EVOH to be fed to the extruder in the first step described later.

In the first step, the water-containing EVOH with a water content W1 from 10 to 90 mass% and at a temperature from 80°C to 130°C is introduced into the extruder for melt kneading. The form of the water-containing EVOH to be introduced into the extruder is not particularly limited and examples of the form include a paste and the like. The direct contact of the EVOH solution with the water vapor in the vessel as described above produces the water-containing EVOH in a paste. The EVOH is taken out of the vessel without gelation while maintaining the fluidity.

The water-containing EVOH to be introduced into the extruder has a water content W1 from 10 to 90 mass%. If the water content W1 is less than 10 mass%, the melt viscosity of the water-containing EVOH becomes too high, causing the water-containing EVOH not to be extruded from a distal end of the extruder and the elution of the EVOH to increase. In addition, securing the fluidity causes an increase in the melting temperature of the water-containing EVOH and degradation of the EVOH and thus the hue of the EVOH to be obtained becomes worse. The water content W1 is preferably 20 mass% or more, more preferably 30 mass% or more, even more preferably 40 mass% or more, and particularly preferably 45 mass% or more. Meanwhile, if the water content W1 is more than 90 mass%, the melt viscosity of the water-containing EVOH becomes too low, causing the elution of the EVOH to increase. The water content W1 is preferably 80 mass% or less, more preferably 70 mass% or less, even more preferably 60 mass% or less, and particularly preferably 55 mass% or less. The water content W1 of the water-containing EVOH to be introduced into the extruder is measured by the method described in Examples below. The water content W1 may be adjusted by, for example, the conditions for post-treatment of the EVOH solution or paste, the conditions for obtaining a water-containing EVOH from the EVOH solution or paste, and the like.

The temperature of the water-containing EVOH to be fed to the extruder is from 80°C to 130°C. If the temperature is less than 80°C, the melt viscosity of the water-containing EVOH becomes too high, causing the water-containing EVOH not to be extruded from a distal end of the extruder and the elution of the EVOH to increase. The temperature is preferably 90°C or more and more preferably 95°C or more. Meanwhile, if the temperature is more than 130°C, the melt viscosity of the water-containing EVOH becomes too low, causing the elution of the EVOH to increase. The temperature is preferably 125°C or less and more preferably 115°C or less. The temperature of the water-containing EVOH may be adjusted by, for example, the conditions for obtaining a water-containing EVOH from the EVOH solution or paste and the like.

From the perspective of preserving the working environment and the surrounding environment and the perspective of inhibiting sticking of water-containing EVOH pellets to be obtained to each other, the content of the alcohol with a boiling point of 100°C or less in the water-containing EVOH to be introduced into the extruder is preferably 10 mass% or less, more preferably 5 mass% or less, even more preferably 1 mass% or less, and particularly preferably 0.5 mass% or less.

The water-containing EVOH to be introduced into the extruder may contain an alkali metal salt equivalent to, for example, residues of the catalyst used in the saponification step and the like approximately from 0.1 to 5 mass% in terms of metal and may also contain by-product salts, other impurities, and the like. The content of the components other than the EVOH, water, and the alcohol with a boiling point of 100°C or less in the water-containing EVOH to be fed to the extruder is preferably 10 mass% or less, more preferably 5 mass% or less, even more preferably 3 mass% or less, and particularly preferably 1 mass% or less.

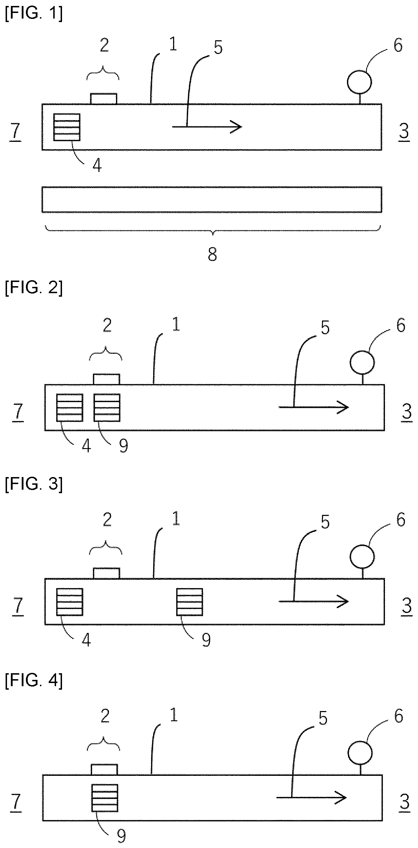

Fig. 1 is a diagram illustrating cylinder configuration (upper side of Fig. 1) and screw configuration (lower side of Fig. 1) of the extruder used in Example 1 and the like described later. With reference to Fig. 1, the first step is further described.

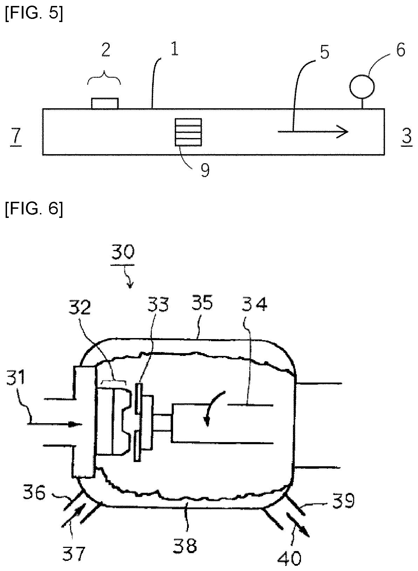

The extruder used in the first step may be a single-screw extruder or a multi-screw extruder, and is preferably a twin-screw extruder. The extruder preferably has an LID from 8 to 30, more preferably from 9 to 25, and even more preferably from 10 to 20. As a cylinder 1, a block cylinder or the like is used. The cylinder 1 of the extruder is provided with an inlet 2 for a water-containing EVOH. The water-containing EVOH is introduced into the inlet 2 and then a screw arranged in the cylinder 1 rotates, causing the water-containing EVOH to flow to the distal end (downstream side 3) of the cylinder 1 along the axis of the cylinder 1. In this situation, water in the water-containing EVOH is discharged from a liquid outlet (back slit 4) provided in the cylinder 1 and the water content of the water-containing EVOH is reduced. As just described, the present invention has marked characteristics that the extruder used in the first step has the back slit 4 and water in the water-containing EVOH is discharged from the back slit 4. The back slit 4 is a slit for water discharge (liquid outlet) provided an upstream side 7 of a flow 5 of the water-containing EVOH from the inlet 2 for a water-containing EVOH. Conventional extruders are provided with a slit for water discharge (liquid outlet 9) below the inlet 2 (Fig. 4) or the downstream side 3 of the flow 5 of the water-containing EVOH from the inlet 2 (Fig. 5), where continuous operation causes an elution trace of the EVOH to be left on the liquid outlet 9, and leaving the situation for a long period has a possibility of blocking the liquid outlet 9 and affecting the production, and thus the conventional extruders have to be regularly cleaned. As a result of intensive studies to inhibit elution traces of the EVOH, the present inventor has found that providing the back slit 4 described above in the cylinder 1 for water discharge from the back slit 4 surprisingly inhibits the elution of the EVOH in the discharged water and inhibits elution traces of the EVOH.

It is preferred that, in a plan view of the extruder from the vertical direction to the axis of the cylinder 1, the back slit 4 is provided on the upstream side 7 of the flow 5 of the water-containing EVOH from the inlet 2 for a water-containing EVOH and the back slit 4 does not overlap the inlet 2, that is, the part on the most downstream side 3 of the back slit 4 is arranged upstream from the part on the most upstream side 7 of the inlet 2. It is also preferred that the extruder does not have the liquid outlet 9 downstream from the inlet 2 for a water-containing EVOH, and it is more preferred that the extruder does has no liquid outlet 9 other than the back slit 4. When the extruder has no liquid outlet 9 other than the back slit 4, the elution of the EVOH tends to be inhibited more. The kind of the back slit 4 used in the present invention is not particularly limited and a general dewatering slit is used. Specifically, a wedge wire dewatering slit, a screen mesh dewatering slit, or the like is used.

The extruder preferably has a cylinder temperature from 70°C to 110°C. The cylinder temperature in such a range further inhibits the elution of the EVOH. The temperature is preferably 105°C or less, more preferably 100°C or less, and even more preferably 95°C or less. In this context, the cylinder temperature is the highest temperature in a part on the downstream side from the water-containing EVOH inlet 2.

As the screws of the extruder, those of a segment type and the like are used. The screw rotation speed is preferably from 10 to 2000 rpm. The screw rotation speed in such a range further inhibits the elution of the EVOH. The screw rotation speed is more preferably 50 rpm or more, even more preferably 120 rpm or more, still more preferably 150 rpm or more, and particularly preferably 200 rpm or more. Meanwhile, the number of screw rotations is more preferably 1500 rpm or less, even more preferably 1000 rpm or less, still more preferably 800 rpm or less, and particularly preferably 500 rpm or less.

The water content W2 of the water-containing EVOH extruded from the extruder has to be from 5 to 50 mass%. If the water content W2 is less than 5 mass%, the melt viscosity of the water-containing EVOH becomes too high, causing the water-containing EVOH not to be extruded from a distal end of the extruder and the eluted EVOH to increase. The water content W2 is preferably 10 mass% or more, more preferably 20 mass% or more, and even more preferably 30 mass% or more. Meanwhile, if the water content W2 is more than 50 mass%, the melt viscosity of the water-containing EVOH becomes too low, causing the eluted EVOH to increase. The water content W2 is preferably 45 mass% or less and more preferably 40 mass% or less.

In the present invention, the ratio (W2/W1) of the water content W2 of the water-containing EVOH extruded from the extruder to the water content W1 of the water-containing EVOH to be introduced into the extruder has to be 0.2 or more and less than 1. The ratio (W2/W1) in such a range further inhibits the elution of the EVOH. The ratio (W2/W1) is preferably 0.3 or more, more preferably 0.4 or more, even more preferably 0.5 or more, particularly preferably 0.55 or more, and most preferably 0.6 or more. Meanwhile, the ratio (W2/W1) is preferably 0.9 or less, more preferably 0.85 or less, even more preferably 0.8 or less, particularly preferably 0.75 or less, and most preferably 0.7 or less. The water content W2 may be adjusted by, for example, the water content W1, the cylinder temperature, the number of screw rotations, and the like. In addition, as described above, providing the back slit allows adjustment of the water content W2 by discharging water while inhibiting elution of the EVOH in the discharged water.

The temperature of the water-containing EVOH extruded from the extruder has to be from 80°C to 120°C. If the temperature is less than 80°C, the melt viscosity of the water-containing EVOH becomes too high, causing the water-containing EVOH not to be extruded from a distal end of the extruder and the eluted EVOH to increase. The temperature is preferably 85°C or more. Meanwhile, if the temperature is more than 120°C, the melt viscosity of the water-containing EVOH becomes too low, causing the eluted EVOH to increase. The temperature is preferably 115°C or less, more preferably 110°C or less, even more preferably 100°C or less, and particularly preferably 93°C or less. The temperature and the water content W2 of the water-containing EVOH extruded from the extruder are measured by the methods described in Examples.

From the perspective of further inhibiting the elution of the EVOH, the temperature of the water-containing EVOH to be introduced into the extruder is preferably higher than the temperature of the water-containing EVOH extruded from the extruder. The temperature of the water-containing EVOH to be introduced into the extruder is more preferably 1°C or more higher than the temperature of the water-containing EVOH extruded from the extruder, even more preferably 5°C or more higher, and particularly preferably 10°C or more higher.

In the second step, the water-containing EVOH extruded from the extruder is cut to obtain water-containing EVOH pellets. The method is not particularly limited and examples of the method include: a method comprising directly cutting the water-containing EVOH (molten state) extruded from the extruder; and a method comprising extruding the water-containing EVOH extruded from the extruder in a strand in a solidification liquid for solidification and then cutting, and among them, the method comprising directly cutting the water-containing EVOH is preferred. As the method of directly cutting the water-containing EVOH extruded from the extruder, a hot cutting system, an underwater cutting system, and the like are employed. The method of cutting the water-containing EVOH composition obtained in the step 1 described in Patent Document 1 and the like are used preferably. From the perspective of the ease of handling the water-containing EVOH pellets, a nozzle preferably has a diameter from 2 to 5 mmϕ (ϕ denotes a diameter. Hereinafter the same). The water-containing EVOH pellets to be produced may have a size of, for example, 1 mm or more and 10 mm or less in diameter in the case of a spherical shape (or an approximately spherical shape), and 1 mm or more and 10 mm or less in diameter and 1 mm or more and 10 mm or less in length in the case of a columnar shape. It should be noted that columnar pellets are obtained by extrusion in a strand for solidification and then cutting and spherical (or approximately spherical) pellets are obtained by direct cutting in a molten state. Such a method comprising cutting the water-containing EVOH in a molten state is excellent in productivity, not having to consider the draw rate to stably form a strand, compared with the method comprising extrusion in a strand in a solidification liquid for solidification and then cutting. For example, even if a strand is not readily formed as in the case of an EVOH with a low ethylene content, cutting in a molten state facilitates production of the water-containing EVOH pellets.

Examples of the method comprising extrusion in a strand for solidification and then cutting include a technique in which the water-containing EVOH is extruded in a strand in a solidification liquid. Although water is used as the solidification liquid, the solidification liquid may contain a small amount of an alcohol. The temperature of the solidification liquid is preferably from 0°C to 50°C, and the temperature of the water-containing EVOH when extruded is from 80°C to 120°C. The temperature difference allows solidification of the water-containing EVOH in a short time. The temperature of the solidification liquid is preferably from 0°C to 30°C. The solidified strand is cut with a cutter into pellets. As the cutter, a strand cutter is preferably used.

The water-containing EVOH is extruded in a strand in the solidification liquid described above by an arbitrarily shaped nozzle. The shape of such a nozzle is preferably, but not particularly limited to, a cylindrical shape. The water-containing EVOH is thus extruded in a strand from the nozzle. In this situation, the extrusion does not have to be in one strand and may be in an arbitrary number from several to hundreds of strands. Then, the EVOH extruded in a strand is cut after sufficiently solidified to obtain the water-containing EVOH pellets. The pellets may then be washed as described later as needed. Such a pellet may have a size of, for example, 1 mm or more and 10 mm or less in diameter and 1 mm or more and 10 mm or less in length in the case of a columnar shape and 1 mm or more and 10 mm or less in diameter in the case of a spherical shape.

Before drying the water-containing EVOH pellets thus obtained, washing and addition of additives are performed as needed. As the washing method and the additive addition method, the method applied to the pellets of the water-containing EVOH composition obtained in the step 1 described in Patent Document 1 and the like may be employed. As another example, the water-containing EVOH pellets before drying may be melt kneaded again by the extruder, followed by cutting for pelletization. As the melt kneading method, the cutting method, and the method of drying the pellets thus obtained in this case, the melt kneading method in the step 2, the method of pelletizing the EVOH resin obtained in the step 2, and the method of drying the pellets thus obtained described in Patent Document 1 and the like are employed.

The EVOH resin composition pellets obtained using the water-containing EVOH pellets preferably have a melt flow rate (MFR) (190°C, under a load of 2160 g) from 0.5 to 100 g/10 minutes, more preferably from 1 to 50 g/10 minutes, and even more preferably from 1.5 to 20 g/10 minutes. The MFR of 0.5 g/10 minutes or more tends to cause good moldability, and the MFR of 100 g/10 minutes or less tends to cause shaped articles to be obtained to have good mechanical properties. The MFR is measured by the method described in Examples below.

The EVOH thus obtained is used for various applications in addition to being shaped into various shaped articles, such as films, sheets, containers, pipes, and fibers, by melt molding. The production method of the present invention allows improvement in the productivity of such an EVOH.

### EXAMPLES

The present invention is more specifically described below with reference to Examples.

### Evaluation Methods

### (1) Measurement of Water Content

Using 3 g of a water-containing EVOH and water-containing EVOH pellets each obtained in Examples and Comparative Examples, the water content of the water-containing EVOH and the water-containing EVOH pellets was measured with a halogen moisture analyzer "HR73" manufactured by Mettler Toledo in the conditions of a drying temperature of 180°C and a drying time of 15 minutes.

### (2) Evaluation of EVOH Elution

water-containing EVOH pellets were continuously produced by the methods in Examples and Comparative Examples, and whether a white elution trace of the EVOH was left on the liquid outlet provided in the twin-screw extruder was visually checked and evaluated in accordance with the following evaluation criteria. The elution trace of the EVOH is considered to be left on the liquid outlet due to the EVOH eluted into the discharged water.
A: No elution trace of the EVOH was found on the liquid outlet even after continuous operation for 10 or more days.
B: An elution trace of the EVOH was found on the liquid outlet in continuous operation for 7 or more days and less than 10 days.
C: An elution trace of the EVOH was found on the liquid outlet in continuous operation for 5 or more days and less than 7 days.
D: An elution trace of the EVOH was found on the liquid outlet in continuous operation for 3 or more days and less than 5 days.
E: An elution trace of the EVOH was found on the liquid outlet in continuous operation for 1 or more days and less than 3 days.
F: An elution trace of the EVOH was found on the liquid outlet in continuous operation for less than 1 day.
G: Operation could not be carried out due to leakage of the water-containing EVOH in a paste from the liquid outlet.

### (3) Melt Flow Rate (MFR)

The water-containing EVOH pellets obtained in Examples and Comparative Examples were put in deionized water (bath ratio of 20) to repeat, 3 times, operation of stirring and washing for 2 hours and then deliquoring. Surface water was removed from 10 kg of the deliquored pellets using a centrifugal separator. The centrifugally dewatered water-containing pellets with a water content of 33 mass% were put in a twin-screw extruder detailed below, and the resin temperature at an outlet port was set at 100°C for melt kneading in the following conditions while adding a treatment liquid of an aqueous acetic acid/sodium acetate/phosphoric acid solution from a minor component addition area at a distal end on the outlet port side. The amount of the EVOH put per unit time was 10 kg/hour (including the mass of contained water), the amount of the treatment liquid put per unit time was 0.67 L/hour, and the composition of the treatment liquid was an aqueous solution containing 6.7 g/L of acetic acid, 11.3 g/L of sodium acetate, and 1 g/L of phosphoric acid.

### Twin-Screw Extruder Conditions

- Apparatus: 30 mmΦ twin-screw extruder
- L/D: 45.5
- Screws: co-rotating, fully intermeshing type
- Number of screw rotations: 300 rpm
- Cylinder temperature: 100°C
- Die temperature: 105°C
- Number of die holes: 5 holes (3 mmΦ)
- Draw rate: 5 m/min

The EVOH resin in a molten state extruded from the twin-screw extruder was then cut with a hot cutter to obtain approximately spherical pellets. The approximately spherical pellets had a water content of 20 mass%. The pellets thus obtained were dried under a nitrogen flow at 90°C for 15 hours and at 105°C for 15 hours to obtain EVOH pellets (water content of 0.3 mass%) in an approximately spherical shape with a minor diameter of 2.7 mm and a major diameter of 3.7 mm.

The EVOH pellets obtained as above were subjected to MFR measurement in accordance with the method described in JIS K 7210:2014. Specifically, the EVOH pellets were filled in a cylinder with an inner diameter of 9.55 mm and a length of 162 mm of a melt indexer L244 (manufactured by Takara Kogyo Kabushiki Kaisha) and melted at 190°C, and then a load was uniformly applied on the melted resin composition using a plunger with a mass of 2,160 g and a diameter of 9.48 mm. The amount (g/10 minutes) of the resin composition was measured that was extruded per unit time from an orifice with a diameter of 2.1 mm provided at the center of the cylinder.

### (4) Measurement of Alcohol Content Percentage

In liquid nitrogen, 5 g of the water-containing EVOH to be used in Examples and Comparative Examples was frozen and ground, and immediately after grinding, sampled (approx. 500 mg) in a vial for HSS for analysis of methanol in the following conditions. Each sample was measured twice to calculate an alcohol content percentage from the average.

### - Headspace (HSS) - GC/MS

Oven Temperature: 120°C (MHE method: [120°C×30 min.] × 5 times)
Loop Temperature: 200°C
Transfer Temperature: 200°C, with shaking

### GC/MS

Column: DB-WAXetr (30 m - 0.25 mm - 0.5 µm)
Oven: 50°C (maintained for 5 min.) -> 10°C/min. -> 200°C (maintained for 10 min.)
Inlet Port: 230°C (split ratio of 20:1)
Measurement Mode: SIM (m/z = 31)

### Example 1

An EVOH solution containing 100 parts by mass of an EVOH with an ethylene unit content of 32 mol% and a degree of saponification of 99.98 mol%, 60 parts by mass of methanol, and 40 parts by mass of water was continuously fed from an uppermost plate of a plate tower with a tower diameter of 0.3 m and the number of tray plates of 10, and water vapor was blown from a lowermost plate to countercurrently contact the EVOH solution with the water vapor. The temperature in the tower was 130°C and the pressure in the tower was 0.3 MPa. The water-containing EVOH obtained by countercurrently contacting the water vapor was discharged from the bottom of the tower. The temperature of the water-containing EVOH thus obtained was 120°C, and the water content (W1) measured in accordance with the above evaluation method was 54.5 mass%. The alcohol content percentage was 0.05 mass%. The results are shown in Table 1.

The water-containing EVOH thus obtained with a water content (W1) of 54.5 mass% was fed at a resin temperature of 110°C to a twin-screw extruder, illustrated in Fig. 1, having a back slit 4 arranged on an upstream side 7 from an inlet 2 for a water-containing EVOH at 42 kg/hr and was extruded from a die, having 8 pores with a pore size of 30 mm, attached to a distal end of the extruder in the conditions below, and the melt was cut with a hot cutter (Fig. 6) having 2 blades at a distance of 0.05 mm from the die to obtain water-containing EVOH pellets in a flattened spherical shape. The resin at this point had a temperature of 110°C and a water content (W2) measured in accordance with the above evaluation method was 38 mass%. The resin temperature was measured with a temperature sensor in contact with the melt provided near an outlet port of a distal end of the cylinder. The water-containing EVOH pellets were continuously produced in the above conditions and the elution of the EVOH in water discharged from the twin-screw extruder was evaluated in accordance with the above evaluation method. In addition, the water-containing EVOH pellets thus obtained were partially subjected to MFR measurement in accordance with the above evaluation method. The results are shown in Table 1. The flow rate of circulating water for the cutter was 300 liters/min. and the number of rotations of the cutter blades was 3000 rpm. Moreover, the water-containing EVOH pellets thus obtained were put in deionized water (bath ratio of 20) to repeat, 3 times, operation of stirring and washing for 2 hours and then deliquoring. Surface water was removed from the deliquored pellets using a centrifugal separator, followed by drying at 95°C for 3 hours under a nitrogen flow with an oxygen concentration of 1 volume% or less to obtain dried resin composition pellets with a water content of 0.5 mass%. The drying efficiency was determined as good when the water content was 0.8 mass% or less after drying at 95°C for 3 hours under a nitrogen flow with an oxygen concentration of 1 volume% or less.

### Twin-Screw Extruder Conditions

L/D: 14
Diameter: 30 mm
Screws: full flight
Number of screw rotations: 300 rpm
Cylinder temperature: 90°C (highest temperature in a part on the downstream side from the water-containing EVOH inlet 2)
Die temperature: 120°C
Number of die holes: 8 holes

### Examples 2-8, Comparative Examples 1 - 6

Water-containing EVOH pellets were produced and evaluated in the same method as that in Example 1 except for adjusting the conditions, as described in Table 1, of the ethylene unit content, the degree of saponification, the alcohol content percentage, the temperature and the water content W1 of the resin to be fed to the extruder, the arrangement of the liquid outlet, the cylinder temperature, the screw rotation speed, the temperature of the resin extruded from the extruder, and the water content W2 of the resin extruded from the extruder. The results are shown in Table 1. Fig. 2 illustrates the cylinder configuration of the twin-screw extruder in Example 2, Fig. 3 illustrates that in Example 3, Fig. 4 illustrates that in Comparative Example 1, and Fig. 5 illustrates that in Comparative Examples 2 and 6.

**[Table 1]**

| | | | Example 1 | Example 2 | Example 3 | Example 4 | Example 5 | Example 6 | Example 7 | Example 8 | Comparative Example 1 | Comparative Example 2 | Comparative Example 3 | Comparative Example 4 | Comparative Example 5 | Comparative Example 6 |
|---|---|---|---|---|---|---|---|---|---|---|---|---|---|---|---|---|
| EVOH¹⁾ | Ethylene Unit Content | mol% | 32 | 32 | 32 | 32 | 32 | 27 | 32 | 32 | 32 | 32 | 32 | 32 | 32 | 35 |
| | Degree of Saponification | mol% | 99.98 | 99.98 | 99.98 | 99.98 | 99.98 | 99.99 | 99.98 | 99.98 | 99.98 | 99.98 | 99.98 | 99.98 | 99.98 | 99.97 |
| | Resin Temperature | °C | 120 | 120 | 120 | 120 | 110 | 120 | 120 | 120 | 120 | 120 | 120 | 135 | 135 | 130 |
| | Alcohol Content Percentage | mass% | 0.05 | 0.05 | 0.05 | 0.05 | 0.8 | 0.08 | 0.02 | 0.02 | 0.05 | 0.05 | 0.05 | 1.5 | 1.5 | 0.4 |
| | Water Content W1 | mass% | 54.5 | 54.5 | 54.5 | 54.5 | 52.4 | 54.5 | 46.5 | 65.2 | 54.5 | 54.5 | 54.5 | 57.4 | 57.4 | 51.2 |
| | Resin Temperature (Inlet) | °C | 110 | 110 | 110 | 110 | 100 | 110 | 110 | 110 | 110 | 110 | 110 | 135 | 135 | 130 |
| | Slit Arrangement²⁾ | | A | A, B | A, C | A | A | A | A | A | B | C | A | A | A | C |
| | Cylinder Temperature | °C | 90 | 90 | 90 | 75 | 90 | 90 | 90 | 90 | 90 | 90 | 90 | 90 | 90 | 95 |
| | Screw Rotation Speed | rpm | 300 | 300 | 300 | 300 | 300 | 300 | 300 | 300 | 300 | 300 | 100 | 300 | 900 | 450 |
| | Resin Temperature (Outlet) | °C | 95 | 95 | 95 | 90 | 95 | 95 | 95 | 95 | 95 | 95 | 105 | 110 | 110 | 120 |
| | Water content W2 | mass% | 38 | 38 | 38 | 35 | 35 | 39 | 26 | 43 | 44 | 46 | 52 | 49 | 53 | 23 |
| Evaluation | W2/W1 | | 0.69 | 0.69 | 0.69 | 0.65 | 0.68 | 0.72 | 0.56 | 0.66 | 0.81 | 0.84 | 0.96 | 0.85 | 0.93 | 0.45 |
| | Elution of EVOH | | B | C | D | A | A | C | A | C | E | F | G | G | G | F |
| | Water Content after Drying for 3 hrs. | mass% | 0.5 | 0.5 | 0.4 | 0.5 | 0.4 | 0.5 | 0.7 | 0.4 | 0.4 | 0.5 | 0.5 | 1.0 | 1.2 | 0.8 |
| | MFR | g/10 min | 1.6 | 1.6 | 1.6 | 1.6 | 1.6 | 8.0³⁾ | 1.6 | 1.6 | 1.6 | 1.6 | 1.6 | 1.6 | 1.6 | 8.5 |

| | | | | | | | | | | | | | | | | |
|---|---|---|---|---|---|---|---|---|---|---|---|---|---|---|---|---|
| 1) Water-containing EVOH to be fed to extruder, 2) A: Upstream from inlet (back slit), B: below inlet, C: downstream from resin inlet 3) 210°C, load of 2160 g | | | | | | | | | | | | | | | | |

From the comparison between Examples 1 - 6 and Comparative Examples 1, 2, and 6, it is understood that the elution of the EVOH in water discharged from the extruder was inhibited in the case of using the extruder having a back slit. In addition, from the comparison between Example 1 and Examples 2 and 3, it is understood that the elution of the EVOH was further inhibited by providing the extruder with no slit (liquid outlet) other than the back slit. Moreover, from the comparison between Example 1 and Examples 4 and 5, it is understood that the elution of the EVOH was further inhibited by adjusting the temperature of the resin to be fed to the extruder and the cylinder temperature. Still in addition, from Example 6, it is understood that the elution of the EVOH was sufficiently inhibited even in the case of the EVOH with a low ethylene unit content.

In contrast, as in Comparative Examples 3 and 5, a high water content W2 was prone to cause the elution of the EVOH. In addition, as in Comparative Example 4, a high temperature of the water-containing EVOH to be fed to the extruder was prone to cause the elution of the EVOH even when the back slit was provided.

### DESCRIPTION OF REFERENCE SIGNS

- 1: Cylinder
- 2: Inlet
- 3: Downstream Side
- 4: Back Slit
- 5: Flow of Water-Containing EVOH
- 6: Temperature Sensor
- 7: Upstream Side
- 8: Full Flight Screw
- 9: Liquid Outlet
- 30: Hot Cutter
- 31: Melt Feed Port
- 32: Die
- 33: Rotating Blade
- 34: Rotation Axis
- 35: Cutter Housing
- 36: Cooling Water Feed Port
- 37: Cooling Water
- 38: Water Film
- 39: Pellet Outlet
- 40: Cooling Water and Pellets

## Claims

1. A method of producing water-containing ethylene-vinyl alcohol copolymer pellets, comprising:
a first step of introducing a water-containing ethylene-vinyl alcohol copolymer with a water content W1 from 10 to 90 mass% and at a temperature from 80°C to 130°C into an extruder for melt kneading; and
a second step of cutting the water-containing ethylene-vinyl alcohol copolymer extruded from the extruder for obtaining water-containing ethylene-vinyl alcohol copolymer pellets, wherein
the extruder has a back slit and water is discharged from the back slit,
the water-containing ethylene-vinyl alcohol copolymer is extruded from the extruder at a temperature from 80°C to 120°C,
the water-containing ethylene-vinyl alcohol copolymer extruded from the extruder has a water content W2 from 5 to 50 mass%, and
a ratio (W2/W1) of the water content W2 to the water content W1 is 0.2 or more and less than 1.

2. The production method according to Claim 1, wherein the extruder has a cylinder temperature from 70°C to 110°C.

3. The production method according to Claim 1 or 2, wherein the extruder does not have a liquid outlet downstream from an inlet of the water-containing ethylene-vinyl alcohol copolymer.

4. The production method according to any one of Claims 1 through 3, wherein the extruder has a screw rotation speed from 10 to 2000 rpm.

5. The production method according to any one of Claims 1 through 4, further comprising a step of: introducing an ethylene-vinyl alcohol copolymer solution into a vessel, the solution containing 50 parts by mass or more of an alcohol with a boiling point of 100°C or less based on 100 parts by mass of an ethylene-vinyl alcohol copolymer; contacting the solution with water vapor in the vessel to let out the alcohol together with the water vapor; and taking the water-containing ethylene-vinyl alcohol copolymer out of the vessel, wherein
the water-containing ethylene-vinyl alcohol copolymer taken out of the vessel is introduced into the extruder.

6. The production method according to any one of Claims 1 through 5, wherein the ethylene-vinyl alcohol copolymer has an ethylene unit content from 20 to 60 mol%.
